# EUROPÄISCHE PATENTSCHRIFT

(11) **EP 1 641 068 B1**
(45) Veröffentlichungstag und Bekanntmachung des Hinweises auf die Patenterteilung: **28.03.2012**
(21) Anmeldenummer: 05021003.8
(22) Anmeldetag: 27.09.2005
(51) Int. Cl.: H01Q 1/32, H01Q 1/12, B25B 27/00

(54) **Antenne und Verfahren zur Befestigung einer Antenne an einem Fahrzeug mittels Klemmkraft, erzeugt vorzugsweise durch ein Drehbajonett**
Antenna and method for mounting an antenna on a vehicle by a clamping force, preferably obtained by a bayonet connector
Antenne et procédé pour la fixation d'une antenne sur une voiture à la force de serrage, de préférence obtenue par un connecteur à bayonnette

(30) Priorität: 19.09.2005 DE 102005044610; 28.09.2004 DE 102004046979
(43) Veröffentlichungstag der Anmeldung: 29.03.2006
(73) Patentinhaber: Hirschmann Car Communication GmbH, 72654 Neckartenzlingen (DE)
(72) Erfinder: Blickle, Günther, 72149 Neustetten (DE)
(74) Vertreter: Greif, Thomas

(56) Entgegenhaltungen:
- DE-U1- 9 102 092
- US-A- 1 946 063
- US-A- 3 842 790
- US-A- 4 649 613
- US-A- 5 095 604
- US-A1- 2003 068 198
- US-A1- 2004 183 734
- US-B1- 6 469 678

## Beschreibung

Die Erfindung bezieht sich auf eine Antenne eines Fahrzeuges und ein Verfahren zur Befestigung der Antenne an einem Fahrzeugbauteil gemäß den Merkmalen des jeweiligen Oberbegriffes der unabhängigen Patentansprüche.

Eine derartige zum Beispiel als Dachantenne ausgeführte Antenne wird üblicherweise dadurch an einer Karosserie befestigt, dass die Bodenplatte einen Gewindeansatz aufweist, der durch eine Öffnung in der Karosserie gesteckt wird, wobei dann von innen die Bodenplatte mittels eines Stützelements (an der Bodenplatte angeformter Gewindezapfen) mit der Karosserie unter Einsatz einer Mutter verschraubt wird. Bei dieser Montage sind zwei Personen erforderlich, um eine Montage durchzuführen, da eine Person die Dachantenne in ihrer lagerichtigen Postion an dem Fahrzeugbauteil von aussen festhalten muss, während die andere Person die Verschraubung innerhalb der Karosserie unter Zuhilfenahme von Werkzeug vornimmt.

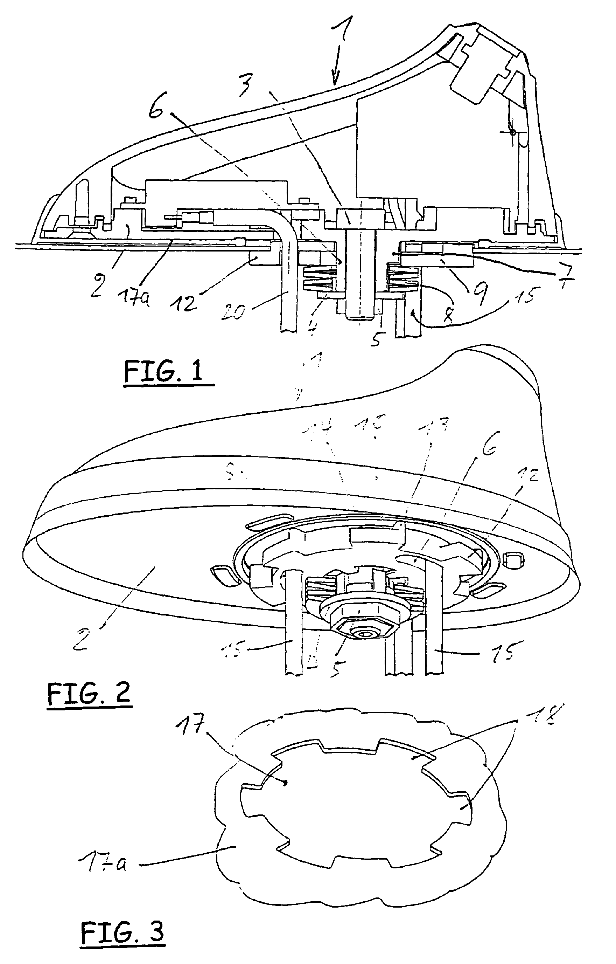

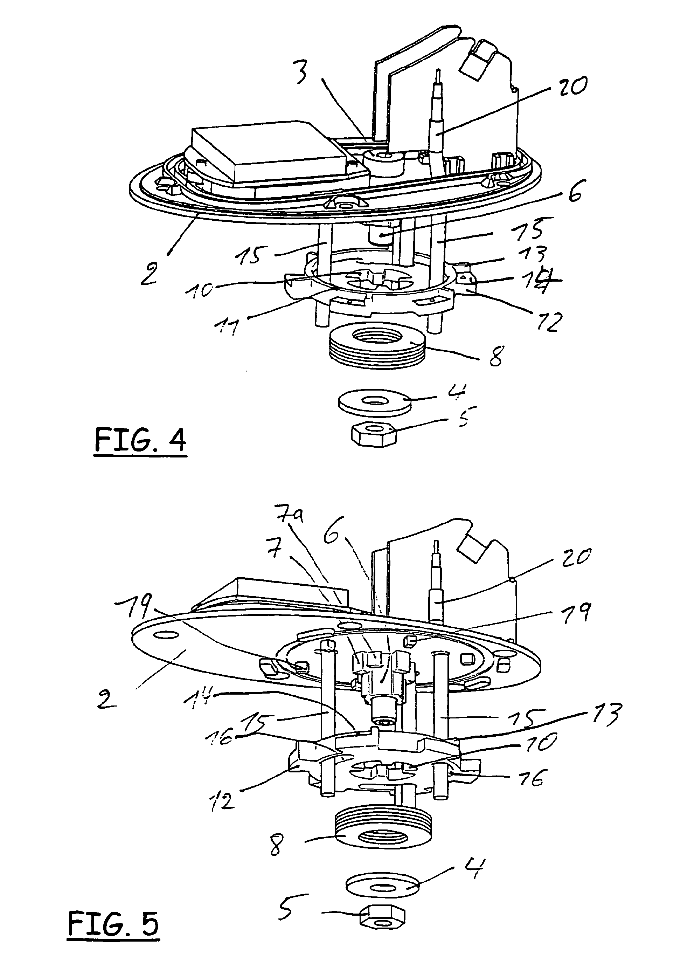

Bei der US 6,469,678 B1 wird eine vormontierte Antenneneinheit (siehe Figur 2) in eine Öffnung des Fahrzeugteiles (V) eingesetzt (siehe Figur 3), wobei dann anschließend ein Verriegelungselement (siehe Figuren 4 und 5) von unterhalb des Fahrzeugteiles (V) festgeschraubt werden muss. Bei diesem Verriegelungselement handelt es sich zwar um ein Verriegelungselement, welches nach dem Bajonettprinzip funktioniert, so dass beim Festlegen der Antenne an dem Fahrzeugteil eine gewisse Vereinfachung gegeben ist. Dies ergibt sich aus der konstruktiven Gestaltung des Verriegelungselementes, wozu auf die Figuren 4 und 5 der US-Patentschrift verwiesen wird. Allerdings ist das Verriegelungselement ein Einzelteil und steht in keiner Verbindung mit der übrigen Antenne während ihrer Montage. Außerdem steht dieses Verriegelungselement während der Montage nicht unter einer Vorspannung in Bezug auf eine Bodenplatte der Antenne. Gleiches gilt auch für die G 91 02 092 sowie die US 2003/0068198 A1.

Die bekannten Dachantennen und deren Montage sind insbesondere in Verbindung mit den heutigen Montageerfordernissen viel zu aufwendig und zeitraubend.

Der Erfindung liegt daher die Aufgabe zu Grunde, eine Vereinfachung der Montage der Antenne zu erreichen, wobei die Montage ohne Einsatz von Werkzeugen, ohne eine zweite Person und ohne sonstige Hilfsmittel erfolgen soll. Trotzdem soll erreicht werden, dass die Antenne nach einer einfachen Montage derart lagerichtig an dem Fahrzeugbauteil befestigt ist, dass die Verbindung dauerhaft spielfrei, ausreichend fest und wasserdicht ist. Es soll weiterhin eine erhöhte Freiheit in der Gestaltung des Montageablaufes erzielt werden, da die Antenne in jeder beliebigen Phase des Montageablaufs von außerhalb der Karosserie her montierbar sein soll, auch wenn ein Dachhimmel in einem Innenbereich der Karosserie bereits angebracht ist.

Diese Aufgabe ist durch die Merkmale des Patentanspruches 1 gelöst.

Erfindungsgemäß ist vorgesehen, dass das Stützelement während der Montage oder nach erfolgter Montage mittels einer Drehbewegung eine auf das Fahrzeugbauteil wirkende Klemmkraft ohne Einsatz eines Werkzeuges aufbringt und weiterhin so ausgebildet ist, dass die Antenne nach erfolgter Montage lagerichtig, spielfrei und dichtend an dem Fahrzeugbauteil festgelegt ist, wobei an der Unterseite der Bodenplatte über eine Gewindeverbindung eine Bajonettscheibe angeordnet ist, wobei ein Federelement vorgesehen ist, wobei die notwendige Klemmkraft auf die Bajonettscheibe gegen die Bodenplatte durch das vorgespannte Federelement erzeugt wird und dass die Öffnung so ausgebildet ist, dass in einer Lage der Bajonettscheibe in Bezug auf das Fahrzeugteil die Bajonettscheibe durch die Öffnung geführt werden kann und in davon abweichenden Lagen nicht, wobei weiterhin Begrenzungselemente an der Bajonettscheibe vorgesehen sind, wobei die Bajonettscheibe durch eine weitere Bewegungsfolge der Antenne in die Öffnung in dem Fahrzeugbauteil unterhalb des Fahrzeugbauteiles in Eingriff bzw. in räumliche Überdeckung gebracht und die Vorspannung beim Anliegen der Begrenzungselemente an korrespondierenden Begrenzungselementen ausgelöst wird.

Die Erfindung nutzt daher den Grundgedanken, bekannte Verbindungen, wie Schraubverbindungen, Rastverbindungen und dergleichen zu ersetzen durch eine Klemmkraft, die während und/oder nach erfolgter Montage der Antenne an dem Fahrzeugbauteil aufgebracht wird. Dadurch ist es möglich, dass eine einzige Person die Antenne einfacher montieren kann, ohne dass zum Beispiel eine Mutter auf einen Gewindezapfen von einer zweiten Person aufgeschraubt werden muss, während die erste Person die Antenne lagerichtig an dem Fahrzeugbauteil hält. Dadurch reduziert sich die Teilevielfalt und auch der Entfall eines Montagewerkzeuges ergibt sich in vorteilhafter Weise. Der wesentlichste Vorteil ist aber der, dass nur eine einzige Person die Antenne montieren kann, und zwar in einem Arbeitsschritt, in dem nämlich die Bodenplatte mit dem daran angeformten Stützelement durch eine Öffnung in dem Fahrzeugbauteil durchgeführt und die Antenne so verdreht wird, dass während der Drehbewegung oder nach Ausführung der Drehbewegung die Klemmkraft erzeugt wird, wobei das Stützelement weiterhin so ausgebildet ist, dass die weitere Ausführung der Drehbewegung nicht mehr möglich ist, wenn die Antenne lagerichtig, spielfrei und dichtend an dem Fahrzeugbauteil festgelegt ist. Vorzugsweise wird in diesem Moment die höchste Klemmkraft erzielt.

Die Klemmkraft wird durch eine Drehbewegung aufgebracht, wobei eine Verdrehung der Antenne, insbesondere deren Bodenplatte relativ zu dem Fahrzeugbauteil stattfindet. In diesem Zusammenhang wird das Aufschrauben einer Mutter auf den bekannten Gewindezapfen nicht als Drehbewegung verstanden. Ebensowenig soll unter den Begriff Klemmkraft eine Verklebung verstanden werden.

In Weiterbildung der Erfindung ist an der Unterseite der Bodenplatte der Antenne eine Bajonettscheibe angebracht, die durch eine vorbestimmte Bewegungsfolge über den Angriff an der Antenne in eine hierzu passende Öffnung in dem Fahrzeugbauteil hindurch eingeführt und unterhalb des Fahrzeugbauteiles in Eingriff bzw. in räumliche Überdeckung gebracht wird, so dass ein Herausziehen der Bajonettscheibe aus der Öffnung in dem Fahrzeugbauteil in zur Oberfläche des Fahrzeugbauteiles senkrechter Richtung nicht mehr möglich ist. Die Ausbildung des Stützelementes als Bajonettscheibe hat den Vorteil, dass durch eine einfache vorbestimmte Bewegungsfolge die Anordnung der Antenne an dem Fahrzeugbauteil durchgeführt werden kann. Hierzu weist das Fahrzeugbauteil eine Öffnung auf, die mit der Außenkontur des Stützelementes derart korrespondiert, dass die Durchführung des Stützelementes durch die Öffnung des Fahrzeugbauteiles in einer noch nicht lagerichtigen Position der Antenne möglich ist, aber nach Erreichen der lagerichtigen Position der Antenne an dem Fahrzeugbauteil ein Herausziehen verhindert wird. Hierzu weist in weiterer Ausgestaltung der Erfindung die Bajonettscheibe eine keilwellenförmige, eine dreieckige, eine viereckige oder eine im wesentlichen polygone Außenkontur auf, wobei allgemein die Bajonettscheibe eine beliebige unrunde oder uneckige Außenkontur besitzt, mit der es möglich ist, nach dem Durchstecken des Stützelementes durch die dazu korrespondierende Öffnung in dem Fahrzeugbauteil eine Überdeckung bzw. einen Eingriff unter der Innenseite des Fahrzeugbauteiles herzustellen. Durch das Zusammenspiel von Kontur der Öffnung in dem Fahrzeugbauteil und Außenkontur des Stützelementes bzw. dessen Bajonettscheibe wird es also ermöglicht, dass die Antenne zunächst in einer nicht lagerichtigen Position durch die Öffnung in dem Fahrzeugbauteil durchgeführt, verdreht und beim Ausführen der Drehbewegung die Klemmkraft erzeugt wird, die die Antenne während und/oder nach erfolgter Ausführung der Drehbewegung an dem Fahrzeugbauteil festsetzt. Diese vorbestimmte Bewegungsfolge (zum Beispiel Einsetzen der Antenne von Oben in die Öffnung und anschließende Drehbewegung) gestattet es, dass eine einzige Person die Antenne an dem Fahrzeugbauteil in der gewünschten Weise festlegen kann.

In einer weiteren Ausgestaltung der Erfindung wird durch Fortführen der vorbestimmten Bewegungsfolge über den Angriff an der Antenne beim Erreichen der bestimmungsgemäßen Ausrichtung auf oder an dem Fahrzeugbauteil selbsttätig eine Klemmung an dem Fahrzeugbauteil und eine Vorspannung einer Dichtung zwischen der Antenne und dem Fahrzeugbauteil ausgelöst wird. Eine solche Ausgestaltung hat den Vorteil, dass die Antenne durch die Öffnung in dem Fahrzeugbauteil eingesetzt und solange verdreht werden kann, bis die lagerichtige Position der Antenne zu dem Fahrzeugbauteil erreicht ist. Erst wenn diese lagerichtige Position erreicht ist, wird die Klemmkraft (Vorspannung) selbsttätig ausgelöst, die wiederum bewirkt, dass die Bodenplatte unter Zwischenlegung einer Dichtung an das Fahrzeugbauteil herangezogen wird. Dies hat den Vorteil, dass die Dichtung solange nicht wirksam ist, bis die Antenne lagerichtig an dem Fahrzeugbauteil ausgerichtet ist, um eine einfache relative Bewegung zwischen Fahrzeugbauteil und Antenne sicherzustellen. Erst wenn die lagerichtige Position der Antenne erreicht ist, wird die Klemmkraft ausgelöst, wobei durch die Dichtung zusätzlich bewirkt wird, dass die Antenne nicht nur dichtend, sondern auch stabil, insbesondere unter Ausgleich von Toleranzen, an dem Fahrzeugbauteil festgelegt ist.

In Weiterbildung der Erfindung ist vorgesehen, dass die notwendige Klemmkraft durch ein vorgespanntes Federelement erzeugt wird. Dabei kann das Federelement als Spiralfeder, Tellerfederpaket oder dergleichen ausgebildet sein. In vorzugsweiser Ausgestaltung bildet das Federelement eine Baueinheit mit der Bajonettscheibe des Stützelementes.

Wie schon beschrieben, besteht in weiterer Ausgestaltung der Erfindung die vorbestimmte Bewegungsfolge aus den Bewegungsschritten: senkrechtes Einführen des Stützelementes durch die Öffnung in dem Fahrzeugbauteil und anschließend einer Drehbewegung, wodurch das Stützelement unter Aufbringung der Klemmkraft in Eingriff gebracht wird mit dem Fahrzeugbauteil.

In einer weiteren Ausgestaltung der Erfindung ist vorgesehen, dass zur Befestigung der Antenne das Stützelement als Bajonettscheibe ausgebildet ist, dass die eine Spannfeder aufweist, die eine aufeinander zu gerichtete Spannkraft zwischen der Bodenplatte und der Bajonettscheibe herstellt, dass zwischen Bodenplatte und Bajonettscheibe Führungselemente vorgesehen sind, die eine begrenzte Verdrehung der Bodenplatte und der Bajonettscheibe zueinander erlauben, dass die Bajonettscheibe Begrenzungselemente aufweist, die zu Anschlägen in der Öffnung der Karosserie passen und dass zwischen Bodenplatte und Bajonettscheibe Abstandselemente mit entsprechenden Ausnehmungen im zweiten Bauteil vorgesehen sind, die in der einen Verdrehstellung der Bodenplatte zur Bajonettscheibe einen ruhenden bzw. festen Abstand der Bajonettscheibe zur Bodenplatte sicherstellen und in der anderen Verdrehstellung in die Aussparungen hineinragen, so dass die Bajonettscheibe durch die Spannkraft der Spannfeder zur Bodenplatte hin verschoben werden kann.

Es handelt sich dabei um eine Antenne, die als fertige Baueinheit an den Montageplatz des Fahrzeuges gebracht wird. Die Antenne bildet eine komplette Einheit, so dass eine Vereinfachung der Logistik durch Entfall der Mutter, des Stützelementes und dergleichen am Montageort entsteht. Alle notwendigen Teile sind an der Dachantenne verliersicher fertig montiert.

In einer weiteren Ausgestaltung der Erfindung wird vorgeschlagen, dass die Führungselemente Schlitzöffnungen in der Bodenplatte oder vorzugsweise in der Bajonettscheibe sind, die mit Bolzen in Wirkverbindung stehen, die an der Bajonettscheibe oder vorzugsweise an der Bodenplatte befestigt sind. Dadurch lassen sich die Bodenplatte und die Bajonettscheibe innerhalb der Schtitzöfmungen in begrenztem Umfang gegeneinander verdrehen, deren Bedeutung im Folgenden noch beschrieben wird.

Die Begrenzungselemente sind vorzugsweise Erhebungen, die in Richtung zur Bodenplatte vorstehen und an der Bajonettscheibe angebracht sind. Die Bajonettscheibe ist im Wesentlichen kreisförmig ausgebildet und weist nach außen vorstehende Bajonettvorsprünge auf Die Erhebungen sind an den Rändern der Bajonettvorsprünge angeordnet und stehen in Richtung zur Bodenplatte vor. An den Bajonettvorsprüngen sind in Umfangsrichtung neben den Erhebungen Absenkungen vorgesehen, wobei die Absenkungen an einen zentralen Ring an der Bajonettscheibe angrenzen. Die Öffnung in der Farhzeugkarosserie weist eine zentrale, im Wesentlichen kreisförmige Ausnehmung auf, die zu den Bajonettvorsprüngen der Bajonettscheibe passende Bajonettaussparungen aufweist, sodass die Bajonettscheibe durch die Öffnung in der Karosserie geschoben werden kann.

Durch die zuvor beschriebenen Merkmale ergibt sich eine Antenne, bei der die Nasen zwischen den Bajonettaussparungen in die Absenkungen neben den Erhebungen passen, so dass die Nasen zwischen den Bajonettaussparungen auf die Absenkungen der Bajonettvorsprünge zur Anlage kommen und mit den Erhebungen eine Begrenzung in Drehrichtung bilden. Die Tiefe der Absenkungen ist dabei so gewählt, dass sie niedriger als die Dicke des Blechs des Fahrzeugbauteils ist, damit eine hinreichende Verspannung des Blechs zwischen Bodenplatte und Bajonettscheibe durch die Druckfeder möglich ist. Der Abstand zwischen den Aufstandsflächen an der Unterseite der Bodenplatte und der Fläche der Absenkungen der Bajonettscheibe kann alternativ so gewählt werden, dass er geringer als die Dicke des Blechs des Fahrzeugbauteiles ist.

In einer weiteren Ausgestaltung der Erfindung wird vorgeschlagen, dass die Abstandselemente an der Bodenplatte vorstehende Noppen sind, die den Erhebungen der Begrenzungselemente drehabhängig benachbart sind. Auf diese Weise können die Abstandselemente in der einen Verdrehstellung der Bajonettscheibe gegenüber der Bodenplatte den erforderlichen Abstand zwischen diesen beiden Bauteilen sicherstellen, während in der anderen Verdrehstellung die Noppen den Abstand zwischen den beiden Bauelementen freigeben.

Die Gewindeverbindung zwischen der Bajonettscheibe und der Bodenplatte kann eine Schraube sein, die in der Bodenplatte eingedreht ist und von einer Druckfeder umgeben ist. Es kann aber auch eine Steckschraube vorgesehen sein, die die Bodenplatte durchdringt und außerhalb der Druckfeder durch eine Mutter gesichert ist. Die einfachste Ausführung ist ein Gewindeansatz am Ende des Bodenplattenzapfens, auf dem das Federelement sitzt, auf den dann eine Mutter ggf. mit Scheibe geschraubt wird (also ohne Schraube). Oder der Bodenplattenzapfen hat eine entsprechende Gewindebohrung für eine Schraube, die von unten her ggf. zusammen mit einer Scheibe in den Zapfen eingedreht wird und das Federelement und die Bajonettscheibe auf dem Zapfen fixiert.

Zwischen der Bodenplatte und dem Schraubenkopf oder der Mutter oder einer dort angeordneten Unterlegscheibe ist vorzugsweise eine Abstandshülse vorgesehen. Diese Abstandshülse definiert zum einen die Vorspannung der Druckfeder, da sie eine Begrenzung der Eindrehtiefe der Spannschraube darstellt. Zum anderen steht die Abstandshülse drehfest mit der Bodenplatte in Wirkverbindung oder ist als Teil derselben an dieser angeformt , weist an ihrem Umfang Profilbalken auf, die mit passenden Segmentaussparungen um die zentrale Bohrung in der Bajonettscheibe derart in Wirkverbindung stehen, dass die Stirnflächen der Profilbalken Abstandselemente für die Bajonettscheibe in der einen Drehstellung der Bajonettscheibe zur Bodenplatte darstellen und dass die Profilbalken in der anderen Drehstellung in die Segmentaussparungen hineinragen und die Spannkraft der Druckfeder freigeben. Diese Ausgestaltung der Abstandshülse als Abstandselemente ist eine Alternative oder eine zusätzliche Abstandseinrichtung zu den Noppen, die den Erhebungen benachbart sind.

Die Montage der Antenne nach einem der vorhergehenden Ansprüche an einer Fahrzeugkarosserie erfolgt nach den folgenden Verfahrensschritten:

Zunächst wird die Bajonettscheibe so an der Bodenplatte montiert, dass die Abstandselemente einen definierten Abstand der Bajonettscheibe zur Bodenplatte sicherstellen, d.h. die Noppen stützen sich auf den Erhebungen ab und/oder die Bajonettscheibe stützt sich auf den Stirnflächen der Profilbalken ab. Dabei wird das Federelement beim Anziehen der Mutter oder Schraube gegen die Abstandshülse und ggf. Unterlegscheibe vorgespannt. Die Dachantenne wird dann mit der Bajonettscheibe mit den Bajonettvorsprüngen durch die Bajonettaussparungen an der Öffnung in der Karosserie eingeführt und dann die Bodenplatte und die Bajonettscheibe so weit gedreht, bis die Nasen zwischen den Bajonettaussparungen an dem Fahrzeugbauteil zwischen die Absenkungen an den Bajonettvorsprüngen und die Bodenplatte gelangen und zwar bis die Ränder der Nasen an die Erhebungen angrenzen. Abschließend wird dann die Bodenplatte soweit gegenüber der an der Karosserie festliegenden Bajonettscheibe weitergedreht, bis die Abstandselemente die Bajonettscheibe gegenüber der Bodenplatte freigeben.

Dann kann sich die volle Federkraft zwischen Bajonettscheibe und Bodenplatte entfalten, die Bodenplatte gegen die Fahrzeugkarosserie drücken und das Blech des Fahrzeugbauteils einspannen, so dass die an der Bodenplatte angebrachte Dichtung bzw. Dichtstreifen an die Karosseriefläche angedrückt werden. An den der Bodenplatte zugewandten Oberflächen der Absenkungen können in vorteilhafter Weise Spitzen angebracht sein, die innen an der Karosserie zur Anlage kommen, die Innenlackierung der Karosserie durchdringen und einen Massekontakt herstellen.

Anstelle der Spitzen kann natürlich auch eine entsprechende Zwischenplatte bzw. Auflage auf der Bajonettscheibe vorgesehen sein, die den Massekontakt herstellt. Nach Einrasten der Noppen in den Raum zwischen den Bajonettvorsprüngen und/oder Einsenken der Profilbalken in die Segmentaussparungen ist eine stabile Festlegung der Bodenplatte bzw. der Dachantenne gegenüber der Bajonettscheibe sichergestellt. Die Bajonettscheibe ihrerseits ist über die Begrenzungselemente bzw. Erhebungen in der Dachöffnung und die Noppen in den Hohlräumen festgelegt, so dass insgesamt eine exakte, dauerhafte Festlegung der Dachantenne an der Karosserie gegeben ist. Die Festlegung und Montage erfolgt, wie den Verfahrensschritten zu entnehmen ist, ohne Hilfsmittel und ohne Werkzeuge und nur mittels einer Person bzw. eines Monteurs von ausserhalb der Karosserie her.

Um die Antenne zerstörungsfrei von ausserhalb der Karosserie her demontieren zu können, wird ein Werkzeug vorgeschlagen, das einen Grundkörper mit zwei gabelförmig angebrachten Leisten aufweist, deren Dicke im Wesentlichen der Höhe der Abstandselemente entspricht. Der Grundkörper weist weiterhin zumindest einen Griff, vorzugsweise zwei Griffstücke auf, so dass eine sichere Handhabung erfolgen kann.

Zur Demontage wird das Werkzeug mit den Leisten zwischen Karosserie und Bodenplatte geschoben, bis die Abstandselemente bzw. die Profilbalken aus den Segmentaussparungen und/oder die Noppen aus den Bajonettaussparungen angehoben sind. Dann kann die Bodenplatte gegenüber der Bajonettscheibe wieder so weit es die Führungselemente zulassen zurückgedreht werden, bis sich die Abstandselemente auf der Bajonettscheibe abstützen, wenn die Antenne wieder entfernt wird. Dadurch ist erneut der Abstand zwischen Bodenplatte und Bajonettscheibe hergestellt und die Klemmung des Dachblechs zwischen Bodenplatte und Bajonettscheibe gelöst. Die Dachantenne wird dann mit der Bajonettscheibe so weit zurückgedreht, bis die Bajonettvorsprünge der Bajonettscheibe in die Bajonettaussparungen der Öffnung in der Karosserie passen, so dass die Dachantenne angehoben und entfernt werden kann. Das Werkzeug ist vorzugsweise aus weichem Kunststoff hergestellt, damit der Lack an der Karosserie nicht beschädigt wird. s ist aber auch eine beliebige andere Ausführungsform der Antenne denkbar, wenn mit ihr die beschriebene Funktionsweise der Demontage erreicht wird.

Ein Ausführungsbeispiel der Erfindung, auf das diese jedoch nicht beschränkt ist, ist in den Figuren 1 bis 6 gezeigt und im Folgenden erläutert.

Es zeigen:
- Figur 1:: einen Schnitt durch eine Dachantenne mit Befestigungsvorrichtung und Schnitt durch die Fahrzeugkarosserie,
- Figur 2:: eine Ansicht der Dachantenne mit Befestigungsvorrichtung von unten,
- Figur 3:: einen Ausschnitt aus einer Fahrzeugkarosserie mit einer Öffnung in der Karosserie,
- Figur 4:: eine Explosionsdarstellung einer Dachantenne mit Befestigungsvor- richtung von schräg oben,
- Figur 5:: eine Explosionsdarstellung einer Dachantenne entsprechend Figur 4 mit Sicht von schräg unten und
- Figur 6:: eine Draufsicht auf eine Dachantenne mit Demontagewerkzeug.

In den Figuren 1 bis 6 ist, soweit im Einzelnen dargestellt, mit 1 eine Dachantenne bezeichnet, die, abgesehen von einer Haube und elektronischen Bauteilen eine mit 2 bezeichnete Bodenplatte aufweist. In der Bodenplatte 2 ist eine Schraube 3 angeordnet, die außerhalb der Bodenplatte eine Unterlegscheibe 4 und eine Mutter 5 aufweist.

Es sei darauf hingewiesen, dass auch in der Bodenplatte ein Gewinde vorgesehen sein kann und dass von außerhalb der Bodenplatte und der Dachantenne eine Schraube eingedreht werden kann. Dann bildet die Bodenplatte die Mutter und die getrennte Mutter entfällt. An der Bodenplatte 2 ist eine Abstandshülse 6 angearbeitet, so dass die Schraube 3 die Abstandshülse 6 durchdringt. Auf dem Außenumfang der Abstandshülse 6 sind Profilbalken 7 angearbeitet, die von der Bodenplatte 2 ausgehend eine bestimmte Länge aufweisen. In Umfangsrichtung neben den Profilbalken 7 sind kürzere Profilbalken 7a vorgesehen. Um die Abstandshülse 6 herum und außerhalb der Längserstreckung der Profilbalken 7, 7a ist eine mit 8 bezeichnete Druckfeder eingebaut, die sich an der Unterlegscheibe 4 und einer mit 9 bezeichneten Bajonettscheibe abstützt. Es kann sich dabei um eine oder um mehrere geschichtete Tellerfedern oder eine Spiraldruckfeder handeln. Ebenso wäre es denkbar, dass das Federelement ein mit der Bajonettscheibe oder alternativ ein mit der Unterlegscheibe verbundenes oder ein an einem dieser Teile angeformtes Teil ist. Die Bajonettscheibe 9 weist um eine zentrale Bohrung herum Segmentaussparungen 10 auf, die derart mit den Profilbalken 7 in Wirkverbindung stehen, dass sie entweder zusammen mit den Profilbalken einen Abstand zwischen Bodenplatte und Bajonettscheibe sicherstellen, oder andererseits den Abstand dadurch freigeben, dass die Profilbalken 7 in die Segmentaussparungen 10 hineinragen. Die Abmessungen der Profilbalken und der Segmentaussparungen können so gewählt ein, dass sie in eingeschobenen Zustand eine Verdrehsicherung in beiden Drehrichtungen darstellen. Mit radialem Abstand zu den Segmentaussparungen 10 ist ein mit 11 bezeichneter zentraler Ring an der Bajonettscheibe 9 angebracht, der in Richtung zur Bodenplatte 2 vorsteht. Um den zentralen Ring 11 herum weist die Bajonettscheibe 9 Bajonettvorsprünge 12 auf, die an dem einen Ende Erhebungen 13 aufweisen, die bis zur Höhe des zentralen Rings 11 reichen. Neben den Erhebungen 13 sind Absenkungen 14 vorgesehen, die bis zu dem zentralen Ring 11 und bis zur anderen Seite der Bajonettvorsprünge reichen. An der Bodenplatte 2 sind weiterhin Bolzen 15 befestigt, die durch Schlitzöffnungen 16 in die Bajonettscheibe reichen. Die Schlitzöffnungen 16 erstrecken sich längs eines Radius, so dass zwischen den Bolzen und den Schlitzöffnungen nur eine bestimmte Drehbewegung zugelassen ist..

In Figur 2 sind die Schlitzöffnungen mit 16 bezeichnet. Anstatt der Kabel können auch an der Bodenplatte angeformte oder direkt an der Leiterplatte angelötete Steckergeometrien durch die Bajonettscheibe hindurch ragen, womit auf die Verwendung von Kabeln gänzlich verzichtet werden kann und die fahrzeugseitigen Kuppler direkt auf diese Stecker aufgesteckt werden können. Aber natürlich wären als zusätzliche Verdrehbegrenzung auch die beschriebenen Bolzen und Schlitzöffnungen sinnvoll. Wie insbesondere Figur 3 zu entnehmen ist, weist die Öffnung in dem Fahrzeugbauteil 17a eine zentrale Ausnehmung 17 auf, an die sich Bajonettaussparungen 18 anschließen. Die zentrale Ausnehmung 17 in dem Fahrzeugbauteil 17a passt zu dem zentralen Ring 11 an der Bajonettscheibe und die Bajonettaussparungen 18 passen zu den Bajonettvorsprüngen 12 an der Bajonettscheibe 9.

Wie insbesondere Figur 5 zu entnehmen ist, sind an der Bodenplatte 2 noch mit 19 bezeichnete Noppen vorgesehen, die in der einen Drehstellung der Bajonettscheibe 9 gegenüber der Bodenplatte 2 mit den Erhebungen 13 korrespondieren und in der anderen Drehstellung in den Raum zwischen den Bajonettvorsprüngen 12 der Bajonettscheibe 9 reichen.

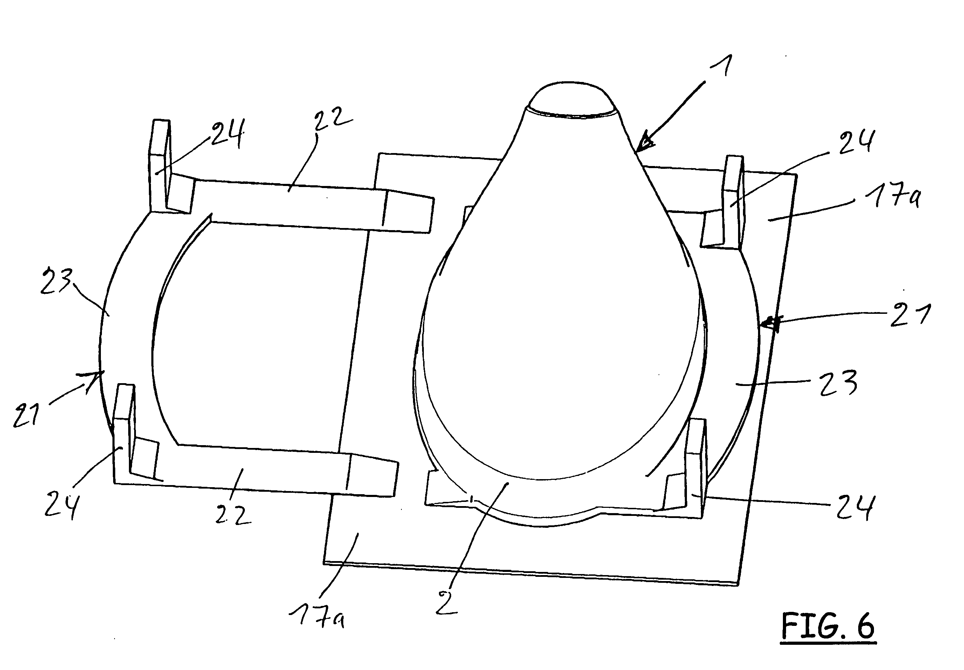

Mit 20 ist ein Antennenkabel bezeichnet, das vorzugsweise neben den Bolzen 15 durch die Schlitzöffnungen 16 geführt werden kann und dadurch einen guten Zugang zu den elektronischen Bauteilen oberhalb der Bodenplatte 2 in der Dachantenne 1 erlauben. Die Schlitzöffnung ist in diesem Fall verlängert, um Raum für das Antennenkabel 20 zu schaffen. Auch separate Schlitzöffnung für das/die Kabel und den/die Bolzen sind möglich, wenn Kabeldurchgänge und Bolzen entsprechend verteilt angeordnet werden können, wobei die einzelnen Schlitzöffnungen in diesem Fall nicht länger als für den möglichen Verdrehwinkel der Bajonettscheibe gegenüber der Bodenplatte nötig ausgeführt werden müssen. In Figur 6 schließlich ist ein mit 21 bezeichnetes Werkzeug dargestellt, das zwei Leisten 22 aufweist, die über einen Grundkörper 23 aneinander befestigt sind. Am Grundkörper 23 sind weiterhin Griffstücke 24 angebracht, die eine gute Handhabe des Werkzeuges 21 sicherstellen. Wie auf der rechten Seite von Figur 6 dargestellt ist, kann das Werkzeug 21 zwischen die Grundplatte 2 und die Fahrzeugkarosserie 17a geschoben werden. Es hebt dabei die Grundplatte 2 gegen die Kraft der Druckfeder 8 von dem Fahrzeugbauteil ab, so dass die Dachantenne 1 mit der Grundplatte 2 entgegen der Montagedrehrichtung so weit verdreht werden kann, bis die Bajonettscheibe 9 mittels der Profilbalken 7 oder der Noppen 19 und der Erhebungen 13 so weit von der Grundplatte beabstandet ist, dass nach Entfernen des Werkzeuges 21 eine leichte Weiterdrehung und Demontage möglich ist.

Es sei ausdrücklich darauf hingewiesen, dass eine Demontage der Dachantenne natürlich auch, wenn eine Zugänglichkeit von der Karosserieinnenseite möglich ist, durch Lösen der Mutter 5, Entfernen der Unterlegscheibe 4 und der Bajonettscheibe 7 erfolgen kann.

An der Bodenplatte können noch die Auflageflächen für die Bodenplatte auf der Karosserie vorhanden sein, auf denen die Karosserie im geklemmten Zustand zur Anlage kommt und die einen definierten Vorspannweg für die Dichtung erzeugen. Weiterhin kann noch eine äußere weiche Dichtlippe an der Bodenplatte vorhanden sein, so dass die Konstruktion der Vorrichtung vorteilhafterweise so abgestimmt werden kann, dass auch diese erst beim Auslösen der Federkraft auf der Karosseriefläche angedrückt wird, so dass sie bei der Drehbewegung zuvor nicht auf der Karosserie reibt und dadurch beschädigt oder umgebogen werden kann. Der zentrale Ring 11 kann die Dachantenne auch bei der Drehbewegung in der zentralen Ausnehmung 17 führen.

Die Antenne kann allgemein eine beliebige, die oben beschriebenen und gezeigten Elemente aufweisende Antenne sein, die an oder auf einem Fahrzeugbauteil befestigt wird. Vorzugsweise (aber ohne Einschränkung) handelt es sich um eine Dachantenne, die auf einem Fahrzeugdach (auch Fahrzeugbauteil bzw. Fahrzeugkarosserie genannt, aber ebenfalls ohne Einschränkung, da es sich auch um eine andere Fläche des Fahrzeuges wie zum Beispiel ein Kofferraumdeckel handeln kann) befestigt wird.

### Bezugszeichenliste

- 1: Antenne (insbesondere Dachantenne)
- 2: Bodenplatte
- 3: Schraube
- 4: Unterlegscheibe
- 5: Mutter
- 6: Abstandshülse
- 7: Profilbalken
- 7a: Profilbalken
- 8: Druckfeder
- 9: Bajonettscheibe
- 10: Segmentaussparungen
- 11: zentraler Ring
- 12: Bajonettvorsprünge
- 13: Erhebungen
- 14: Absenkungen
- 15: Bolzen (bzw. Antennenkabel 20 im weiteren Verlauf)
- 16: Schlitzöffnungen
- 17: zentrale Ausnehmung
- 17a: Fahrzeugbauteil
- 18: Bajonettaussparungen
- 19: Noppen
- 20: Antennenkabel
- 21: Werkzeug
- 22: Leisten
- 23: Grundkörper
- 24: Griffstücke

## Patentansprüche

1. Antenne (1) eines Fahrzeuges mit einem Stützelement zur Festlegung der Antenne (1) an einem Fahrzeugteil (17 a), wobei die Antenne (1) eine Bodenplatte (2) aufweist, an der das Stützelement angeordnet ist, das durch eine Öffnung(17) in dem Fahrzeugbauteil (17 a) einsetzbar ist, **dadurch gekennzeichnet, dass** das Stützelement während der Montage oder nach erfolgter Montage mittels einer Drehbewegung eine auf das Fahrzeugbauteil (17 a) wirkende Klemmkraft ohne Einsatz eines Werkzeuges aufbringt und weiterhin so ausgebildet ist, dass die Antenne (1) nach erfolgter Montage lagerichtig, spielfrei und dichtend an dem Fahrzeugbauteil (17 a) festgelegt ist, wobei an der Unterseite der Bodenplatte (2) über eine Gewindeverbindung eine Bajonettscheibe (9) angeordnet ist, wobei ein Federelement vorgesehen ist, wobei die notwendige Klemmkraft auf die Bajonettscheibe (9) gegen die Bodenplatte (2) durch das vorgespannte Federelement erzeugt wird und dass die Öffnung (17) so ausgebildet ist, dass in einer Lage der Bajonettscheibe (9) in Bezug auf das Fahrzeugteil (17 a) die Bajonettscheibe (9) durch die Öffnung (17) geführt werden kann und in davon abweichenden Lagen nicht, wobei weiterhin Begrenzungselemente an der Bajonettscheibe (9) vorgesehen sind, wobei die Bajonettscheibe (9) durch eine weitere Bewegungsfolge der Antenne (1) in die Öffnung (17) in dem Fahrzeugbauteil (17 a) unterhalb des Fahrzeugbauteiles (17 a) in Eingriff bzw. in räumliche Überdeckung gebracht und die Vorspannung beim Anliegen der Begrenzungselemente an korrespondierenden Begrenzungselementen erst dann ausgelöst wird, wenn die lagerichtige Position der Antenne (1) erreicht ist, wobei die Bodenplatte (2) soweit gegenüber der an dem Fahrzeugbauteil (17a) festliegenden Bajonettscheibe (9) weiter gedreht werden muss, dass die Bajonettscheibe (9) gegenüber der Bodenplatte (2) freigegeben wird.

2. Antenne (1) nach Anspruch 1, **dadurch gekennzeichnet, dass** die Bajonettscheibe (9) eine keilwellenförmige, eine dreieckige, eine viereckige, eine im wesentlichen polygone oder eine beliebige unrunde Außenkontur aufweist, mit der es möglich ist, nach dem Durchführen der Bajonettscheibe (9) durch die dazu passende Öffnung in dem Fahrzeugbauteil (17 a) eine Überdeckung bzw. einen Eingriff unter dem Fahrzeugbauteil (17a) herzustellen.

3. Antenne (1) nach einem der Ansprüche 1 oder 2, **dadurch gekennzeichnet, dass** bei Fortführen der vorbestimmten Bewegungsfolge über den Angriff an der Antenne (1) beim Erreichen der bestimmungsgemäßen Ausrichtung auf dem Fahrzeugbauteil (17 a) selbsttätig eine Klemmung an dem Fahrzeugbauteil (17 a) und eine Vorspannung einer Dichtung zwischen der Antenne (1) und dem Fahrzeugbauteil (17 a) ausgelöst wird.

4. Antenne (1) nach Anspruch 1, **dadurch gekennzeichnet, dass** das Federelement eine Spiralfeder, eine Tellerfeder, ein Tellerfederpaket oder dergleichen ist.

5. Antenne (1) nach einem der vorhergehenden Ansprüche, **dadurch gekennzeichnet, dass** das Federelement und die Bajonettscheibe (9) eine Baueinheit bilden.

6. Antenne (1) nach einem der vorhergehenden Ansprüche, **dadurch gekennzeichnet, dass** die Bewegungsfolge aus den Bewegungsschritten: senkrechtes Einführen des Stützelementes, insbesondere der Bajonettscheibe (9) durch die Öffnung in dem Fahrzeugbauteil (17 a) und danach in Eingriff bringen unter dem Fahrzeugbauteil (17 a) durch eine Drehbewegung besteht.

7. Antenne (1) nach einem der vorhergehenden Ansprüche, **dadurch gekennzeichnet, dass** das Stützelement als Bajonettscheibe (9) ausgebildet ist, dass die Gewindeverbindung zumindest eine Schraube (3), oder/und eine Mutter (5) aufweist, eine Unterlegscheibe (4) aufweisen kann, dass die Bolzenverbindung einen Sicherungsring, einen Splint oder eine Materialanformung als Halteelement für das Stützelement aufweist, dass die Verbindung eine Spannfeder (Druckfeder 8) aufweist, die eine Spannkraft zwischen der Bodenplatte (2) und der Bajonettscheibe (9) herstellt, dass zwischen Bodenplatte (2) und Bajonettscheibe (9) Führungselemente (Bolzen (15), Schlitzöffnungen (16) und/oder Profilbalken (7), Segmentaussparungen (10)) vorgesehen sind, die eine begrenzte Verdrehung der Bodenplatte (2) und der Bajonettscheibe (9) zueinander erlauben, dass die Bajonettscheibe (9) Begrenzungselemente (Erhebungen 13) aufweist, die zu Anschlägen in der Öffnung in der Fahrzeugkarosserie (17a) passen und dass zwischen Bodenplatte (2) und Bajonettscheibe (9) Abstandselemente (Profilbalken (7), Noppen (19)) mit entsprechenden Ausnehmungen (Segmentaussparungen (10)) im zweiten Bauteil vorgesehen sind, die in der einen Verdrehstellung der Bodenplatte (2) zur Bajonettscheibe (9) einen Abstand der Bodenplatte (2) zur Bajonettscheibe (9) sicherstellen und in der anderen Verdrehstellung in die Ausnehmungen (Segmentaussparungen (10)) hineinragen.

8. Antenne (1) nach Anspruch 7, **dadurch gekennzeichnet, dass** die Führungselemente Schlitzöffnungen (16) in der Bodenplatte (2) oder vorzugsweise in der Bajonettscheibe (9) sind, die mit Bolzen (15) in Wirkverbindung stehen, die an der Bajonettscheibe (9) oder vorzugsweise an der Bodenplatte (2) befestigt sind.

9. Antenne (1) nach Anspruch 8, **dadurch gekennzeichnet, dass** die Führungselemente Profilbalken (7) vorzugsweise an der Bodenplatte (2) bzw. an der Abstandshülse (6) sind, die mit Segmentaussparungen (10) vorzugsweise an der Bajonettscheibe (9) in Wirkverbindung stehen, oder **dass** Profilbalken (7) und Segmentaussparungen (10) am jeweils anderen Teil befestigt sind.

10. Antenne (1) nach Anspruch 9. **dadurch gekennzeichnet, dass** die Begrenzungselemente Erhebungen (13) an der Bajonettscheibe (9) sind, die in Richtung zur Bodenplatte (2) vorstehen.

11. Antenne (1) nach einem der vorhergehenden Ansprüche, **dadurch gekennzeichnet, dass** die kreisförmig ausgebildete Bajonettscheibe (9) nach außen vorstehende Bajonettvorsprünge (12) aufweist.

12. Antenne (1) nach einem der vorhergehenden Ansprüche, **dadurch gekennzeichnet, dass** die Erhebungen (13) an den Rändern der Bajonettvorsprünge (12) angeordnet sind.

13. Antenne (1) nach einem der vorhergehenden Ansprüche, **dadurch gekennzeichnet, dass** an den Bajonettvorsprüngen (12) in Umfangsrichtung neben den Erhebungen (13) Absenkungen (14) vorgesehen sind.

14. Antenne (1) nach einem der vorhergehenden Ansprüche, **dadurch gekennzeichnet, dass** die Absenkungen (14) an einen zentralen Ring (11) angrenzen.

15. Antenne (1) nach einem der vorhergehenden Ansprüche, **dadurch gekennzeichnet, dass** die Öffnung in dem Fahrzeugbauteil (17a) eine zentrale im Wesentlichen kreisförmige Ausnehmung (17) ist, die zu den Bajonettvorsprüngen (12) der Bajonettscheibe (9) passende Bajonettaussparungen (18) aufweist.

16. Antenne (1) nach einem der vorhergehenden Ansprüche, **dadurch gekennzeichnet, dass** die Abstandselemente an der Bodenplatte (2) vorstehende Noppen (19) sind, die den Erhebungen (13) an den Bajonettvorsprüngen (12) drehabhängig benachbart sind.

17. Antenne (1) nach Anspruch 16, **dadurch gekennzeichnet, dass** die Gewindeverbindung eine Schraube (3) aufweist, die in die Bodenplatte (2) eingedreht ist und von einer Druckfeder (8) umgeben ist.

18. Antenne (1) nach Anspruch 17, **dadurch gekennzeichnet, dass** zwischen Bodenplatte (2) und Schraubenkopf oder Unterlegscheibe (4) eine Abstandshülse (6) vorgesehen ist.

19. Antenne (1) nach den Ansprüchen 17 und 18, **dadurch gekennzeichnet, dass** die Abstandshülse (6) drehfest mit der Bodenplatte (2) in Wirkverbindung steht, dass die Abstandshülse (6) an ihrem Umfang Profilbalken (7, 7a) aufweist, die mit passenden Segmentaussparungen (10) um die zentrale Bohrung in der Bajonettscheibe (9) derart in Wirkverbindung stehen, dass die Stirnflächen der Profilbalken (7, 7a) Abstandselemente für die Bajonettscheibe (9) in der einen Drehstellung der Bajonettscheibe (9) zur Bodenplatte (2) darstellen und dass die Profilbalken (7, 7a) in der anderen Drehstellung in die Segmentaussparungen (10) hineinragen.

## Claims

1. Antenna (1) of a vehicle having a supporting element for securing the antenna (1) to a vehicle part (17a), wherein the antenna (1) has a baseplate (2) on which the supporting element is arranged, which supporting element can be inserted through an opening (17) in the vehicle component (17a), **characterized in that** during the mounting or after mounting has taken place the supporting element applies, by means of a rotational, movement, a clamping force acting on the vehicle component (17a), without using a tool, and is also embodied in such a way that after mounting has taken place the antenna (1) is secured without play and in seal-forming fashion to the vehicle component (17a), wherein a bayonet disc (9) is arranged on the underside of the baseplate (2) by means of a threaded connection, wherein a spring element is provided, wherein the necessary clamping force on the bayonet disc (9) against the baseplate (2) is generated by the prestressed spring element, and **in that** the opening (17) is embodied in such a way that in one position of the bayonet disc (9) with respect to the vehicle component (17a) the bayonet disc (9) can be guided through the opening (17), and cannot be guided through in positions which differ therefrom, wherein in addition boundary elements are provided on the bayonet disc (9), wherein the bayonet disc (9) is moved into engagement or into spatial congruence underneath the vehicle component (17a) through a further movement sequence of the antenna (1) into the opening (17) in the vehicle component (17a), and when the boundary elements are guided to corresponding boundary elements the prestress is not triggered until the antenna (1) reaches the correct position, wherein the baseplate (2) has to be rotated further with respect to the bayonet disc (9) which is secured on the vehicle component (17a), to such an extent that the bayonet disc (9) is released with respect to the baseplate (2).

2. Antenna (1) according to Claim 1, **characterized in that** the bayonet disc (9) has an outer contour which is splined-shaft-shaped, triangular, quadrilateral, substantially polygonal or has any other nonround shape and with which it is possible to bring about congruence or engagement under the vehicle component (17a) after the bayonet disc (9) has been led through the opening, matching the latter, in the vehicle component (17a).

3. Antenna (1) according to one of Claims 1 and 2, **characterized in that** when the predetermined movement sequence is continued by means of the engagement on the antenna (1) when the correct alignment on the vehicle component (17a) is reached, the antenna (1) is clamped to the vehicle component (17a), and a seal between the antenna (1) and the vehicle component (17a) is prestresed, in an automatically triggered fashion.

4. Antenna (1) according to Claim 1, **characterized in that** the spring element is a helical spring, a disc spring, a disc spring packet or the like.

5. Antenna (1) according to one of the preceding claims, **characterized in that** the spring element and the bayonet disc (9) form one structural unit.

6. Antenna (1) according to one of the preceding claims, **characterized in that** the movement sequence is composed of the following movement steps: perpendicular insertion of the supporting element, in particular of the bayonet disc (9), through the opening in the vehicle component (17a) and then engagement under the vehicle component (17a) through a rotational movement.

7. Antenna (1) according to one of the preceding claims, **characterized in that** the supporting element is embodied as a bayonet disc (9), **in that** the threaded connection has at least one screw (3) and/or a nut (5), and can have a washer (4), **in that** the bolt connection has a securing ring, a splint or an integrally moulded-on portion of material as a securing element for the supporting element, **in that** the connection has a clamping spring (compression spring 8) which brings about a clamping force between the baseplate (2) and the bayonet disc (9), **in that** provided between the baseplate (2) and the bayonet disc (9) are guide elements (bolts (15), slit openings (16) and/or profiled beams (7), segment cutouts (10)) which permit limited rotation of the baseplate (2) and of the bayonet disc (9) with respect to one another, **in that** the bayonet disc (9) has boundary elements (elevated portions 13) which fit stops in the opening in the vehicle bodywork (17a), and **in that** spacer elements (profiled beams (7), knobs (19)) with corresponding recesses (segment cutouts (10)) in the second part are provided between the baseplate (2) and the bayonet disc (9), which recesses ensure that the baseplate (2) and the bayonet disc (9) are spaced apart in the one rotational position of the baseplate (2) with respect to the bayonet disc (9), and project into the recesses (segment cutouts (10)) in the other rotational position.

8. Antenna (1) according to Claim 7, **characterized in that** the guide elements are slitted openings (16) in the baseplate (2) or preferably in the bayonet disc (9) which are operatively connected to bolts (15) which are attached to the bayonet disc (9) or preferably to the baseplate (2).

9. Antenna (1) according to Claim 8, **characterized in that** the guide elements are profiled beams (7), preferably on the baseplate (2) or on the spacer sleeve (6), which are optionally connected to segment cutouts (10), preferably on the bayonet disc (9), or **in that** profiled beams (7) and segment cutouts (10) are attached to the respective other part.

10. Antenna (1) according to Claim 9, **characterized in that** the boundary elements are elevated portions (13) on the bayonet disc (9), which elevated portions (13) protrude in the direction of the baseplate (2).

11. Antenna (1) according to one of the preceding claims, **characterized in that** the bayonet disc (9) which is embodied in a circular shape has outwardly protruding bayonet projections (12).

12. Antenna (1) according to one of the preceding claims, **characterized in that** the elevated portions (13) are arranged at the edges of the bayonet projections (12).

13. Antenna (1) according to one of the preceding claims, **characterized in that** depressions (14) are provided on the bayonet projections (12), next to the elevated portions (13) in the circumferential direction.

14. Antenna (1) according to one of the preceding claims, **characterized in that** the depressions (14) adjoin a central ring (11).

15. Antenna (1) according to one of the preceding claims, **characterized in that** the opening in the vehicle component (17a) is a central, essentially circular recess (17) which has bayonet cutouts (18) which match the bayonet projections (12) of the bayonet disc (9).

16. Antenna (1) according to one of the preceding claims, **characterized in that** the spacer elements are knobs (19) which protrude from the baseplate (2) and which are adjacent, depending on the rotation, to the elevated portions (13) on the bayonet projections (12).

17. Antenna (1) according to Claim 16, **characterized in that** the threaded connection has a screw (3) which is turned into the baseplate (2) and is surrounded by a compression spring (8).

18. Antenna (1) according to Claim 17, **characterized in that** a spacer sleeve (6) is provided between the baseplate (2) and the screw head or washer (4).

19. Antenna (1) according to Claims 17 and 18, **characterized in that** the spacer sleeve (6) is operatively connected in a rotationally fixed fashion to the baseplate (2), **in that** the spacer sleeve (6) has, on its circumference, profiled beams (7, 7a) which are operatively connected to matching segment cutouts (10) around the central drilled hole in the bayonet disc (9) in such a way that the end faces of the profiled beams (7, 7a) form spacer elements for the bayonet disc (9) in the one rotational position of the bayonet disc (9) with respect to the baseplate (2), and **in that** the profiled beams (7, 7a) project into the segment cutouts (10) in the other rotational position.

## Revendications

1. Antenne (1) d'un véhicule avec un élément de support pour la fixation de l'antenne (1) sur une partie de véhicule (17a), dans laquelle l'antenne (1) présente une plaque de base (2), sur laquelle est disposé l'élément de support qui peut être introduit dans la partie de véhicule (17a) à travers une ouverture (17), **caractérisée en ce que** l'élément de support exerce, pendant le montage ou après la fin du montage, une force de serrage agissant sur la partie de véhicule (17a) au moyen d'un mouvement de rotation sans utilisation d'un outil, et est en outre réalisé de telle manière que l'antenne (1) soit, après la fin du montage, fixée en position correcte, sans jeu et de façon étanche sur la partie de véhicule (17a), dans laquelle une rondelle à baïonnette (9) est disposée sur la face inférieure de la plaque de base (2) par un assemblage vissé, dans laquelle il est prévu un élément de ressort, dans laquelle la force de serrage nécessaire est produite sur la rondelle à baïonnette (9) contre la plaque de base (2) par l'élément de ressort précontraint, et **en ce que** l'ouverture (17) est réalisée de telle manière que, dans une position de la rondelle à baïonnette (9) par rapport à la partie de véhicule (17a), la rondelle à baïonnette (9) puisse être guidée à travers l'ouverture (17) mais pas dans des positions qui diffèrent de celle-ci, dans laquelle il est en outre prévu des éléments de limitation sur la rondelle à baïonnette (9), dans laquelle la rondelle à baïonnette (9) est amenée en prise ou en recouvrement spatial en dessous de la partie de véhicule (17a) par une autre succession de mouvements de l'antenne (1) dans l'ouverture (17) dans la partie de véhicule (17a) et la précontrainte n'est générée, lors de l'application des éléments de limitation sur des éléments de limitation correspondants, que lorsque la position correcte de l'antenne (1) est atteinte, dans laquelle la plaque de base (2) doit encore être tournée par rapport à la rondelle à baïonnette (9) fixée sur la partie de véhicule (17a) jusqu'à ce que la rondelle à baïonnette (9) soit libérée par rapport à la plaque de base (2).

2. Antenne (1) selon la revendication 1, **caractérisée en ce que** la rondelle à baïonnette (9) présente un contour extérieur en forme d'arbre cannelé, triangulaire, carré, essentiellement polygonal ou non circulaire quelconque, avec lequel il est possible, après l'introduction de la rondelle à baïonnette (9) à travers l'ouverture prévue à cet effet dans la partie de véhicule (17a), de réaliser un recouvrement ou un engagement en dessous de la partie de véhicule (17a).

3. Antenne (1) selon l'une quelconque des revendications 1 ou 2, **caractérisée en ce que**, en poursuivant la succession de mouvements prédéterminée au-delà de l'action sur l'antenne (1) lorsque l'orientation appropriée sur la partie de véhicule (17a) est atteinte, il s'établit automatiquement un serrage sur la partie de véhicule (17a) et une précontrainte d'un joint d'étanchéité entre l'antenne (1) et la partie de véhicule (17a).

4. Antenne (1) selon la revendication 1, **caractérisée en ce que** l'élément de ressort est un ressort hélicoïdal, une rondelle Belleville, une pile de rondelles Belleville ou analogue.

5. Antenne (1) selon l'une quelconque des revendications précédentes, **caractérisée en ce que** l'élément de ressort et la rondelle à baïonnette (9) forment une unité de construction.

6. Antenne (1) selon l'une quelconque des revendications précédentes, **caractérisée en ce que** la succession de mouvements se compose des pas de mouvement suivants: introduction perpendiculaire de l'élément de support, en particulier de la rondelle à baïonnette (9) à travers l'ouverture dans la partie de véhicule (17a) et ensuite mise en prise en dessous de la partie de véhicule (17a) par un mouvement de rotation.

7. Antenne (1) selon l'une quelconque des revendications précédentes, **caractérisée en ce que** l'élément de support est réalisé sous la forme d'une rondelle à baïonnette (9), **en ce que** l'assemblage vissé présente au moins une vis (3) et/ou un écrou (5), peut présenter une rondelle (4), **en ce que** l'assemblage à goujons présente un anneau de fixation, une cannelure ou une déformation de la matière comme élément de maintien pour l'élément de support, **en ce que** l'assemblage présente un ressort de serrage (ressort comprimé 8), qui produit une force de serrage entre la plaque de base (2) et la rondelle à baïonnette (9), **en ce qu'**il est prévu entre la plaque de base (2) et la rondelle à baïonnette (9) des éléments de guidage (goujons [15], ouvertures de fentes [16] et/ou barres profilées [7], découpes segmentées [10]), qui permettent une rotation limitée de la plaque de base (2) et de la rondelle à baïonnette (9) l'une par rapport à l'autre, **en ce que** la rondelle à baïonnette (9) présente des éléments de limitation (surélévations 13), qui sont adaptés à des butées dans l'ouverture dans la carrosserie de véhicule (17a) et **en ce qu'**il est prévu entre la plaque de base (2) et la rondelle à baïonnette (9) des éléments d'écartement (barres profilées [7], taquets [19]) avec des évidements correspondants (découpes segmentées [10]) dans la deuxième pièce, qui bloquent une distance entre la plaque de base (2) et la rondelle à baïonnette (9) dans une première position de rotation de la plaque de base (2) par rapport à la rondelle à baïonnette (9) et qui pénètrent dans les évidements (découpes segmentées [10]) dans l'autre position de rotation.

8. Antenne (1) selon la revendication 7, **caractérisée en ce que** les éléments de guidage sont des ouvertures de fentes (16) dans la plaque de base (2) ou de préférence dans la rondelle à baïonnette (9), qui sont en liaison active avec des goujons (15), qui sont fixés à la rondelle à baïonnette (9) ou de préférence à la plaque de base (2).

9. Antenne (1) selon la revendication 8, **caractérisée en ce que** les éléments de guidage sont des barres profilées (7) de préférence sur la plaque de base (2) ou sur la douille d'écartement (6), qui sont en liaison active avec des découpes segmentées (10) de préférence sur la rondelle à baïonnette (9), ou **en ce que** des barres profilées (7) et des découpes segmentées (10) sont respectivement fixées sur l'autre pièce.

10. Antenne (1) selon la revendication 9, **caractérisée en ce que** les éléments de limitation sont des surélévations (13) sur la rondelle à baïonnette (9), qui sont saillantes en direction de la plaque de base (2).

11. Antenne (1) selon l'une quelconque des revendications précédentes, **caractérisée en ce que** la rondelle à baïonnette (9) réalisée sous forme circulaire présente des saillies de baïonnette (12) saillantes vers l'extérieur.

12. Antenne (1) selon l'une quelconque des revendications précédentes, **caractérisée en ce que** les surélévations (13) sont disposées sur les bords des saillies de baïonnette (12).

13. Antenne (1) selon l'une quelconque des revendications précédentes, **caractérisée en ce qu'**il est prévu sur les saillies de baïonnette (12) des retraits (14) à côté des surélévations (13) en direction périphérique.

14. Antenne (1) selon l'une quelconque des revendications précédentes, **caractérisée en ce que** les retraits (14) sont adjacents à un anneau central (11).

15. Antenne (1) selon l'une quelconque des revendications précédentes, **caractérisée en ce que** l'ouverture dans la partie de véhicule (17a) est un évidement central (17) essentiellement circulaire, qui présente des découpes à baïonnette (18) adaptées aux saillies de baïonnette (12) de la rondelle à baïonnette (9).

16. Antenne (1) selon l'une quelconque des revendications précédentes, **caractérisée en ce que** les éléments d'écartement sont des taquets (19) en saillie sur la plaque de base (2), qui sont rapprochés des surélévations (13) sur les saillies de baïonnette (12) en fonction de la rotation.

17. Antenne (1) selon la revendication 16, **caractérisée en ce que** l'assemblage vissé présente une vis (3), qui est vissée dans la plaque de base (2) et qui est entourée d'un ressort comprimé (8).

18. Antenne (1) selon la revendication 17, **caractérisée en ce qu'**il est prévu une douille d'écartement (6) entre la plaque de base (2) et la tête de vis ou une rondelle (4).

19. Antenne (1) selon les revendications 17 et 18, **caractérisée en ce que** la douille d'écartement (6) est en liaison active sans rotation avec la plaque de base (2), **en ce que** la douille d'écartement (6) présente à sa périphérie des barres profilées (7, 7a), qui sont en liaison active avec des découpes segmentées appropriées (10) autour de l'alésage central dans la rondelle à baïonnette (9), de telle manière que les faces frontales des barres profilées (7, 7a) représentent des éléments d'écartement pour la rondelle à baïonnette (9) dans une première position de rotation de la rondelle à baïonnette (9) par rapport à la plaque de base (2) et **en ce que** les barres profilées (7, 7a) pénètrent dans les découpes segmentées (10) dans l'autre position de rotation.
